# EUROPEAN PATENT APPLICATION

(11) **EP 3 232 419 A1**
(43) Date of publication of application: **18.10.2017**
(21) Application number: 17158896.5
(22) Date of filing: 02.03.2017
(51) Int. Cl.: G09B 9/08, G09B 9/00, G09B 9/44, G06T 19/00

(54) **REAL-TIME, IN-FLIGHT SIMULATION OF A TARGET**

(30) Priority: 11.04.2016 US 201615095572
(71) Applicant: The Boeing Company, Chicago, IL 60606-1596 (US)
(72) Inventor: Lechner, Rob, Huntington Beach, 92647 (US)
(74) Representative: Witte, Weller & Partner Patentanwälte mbB

(57) **Abstract**

A system is provided for real-time, in-flight simulation of a target. A sensor system may generate a live stream of an environment of an aircraft during a flight thereof, the live stream having associated metadata with structured information indicating a real-time position of the aircraft within the environment. A target generator may generate a target image from a source of information from which a plurality of different target images may be generable. The target generator may also generate a synthetic scene of the environment including the target image. A superimposition engine may then superimpose the synthetic scene onto the live stream such that the target image is spatially and temporally correlated with the real-time position of the aircraft within the environment. The live stream with superimposed synthetic scene may be output for presentation on a display of the aircraft during the flight.

## Description

### BACKGROUND

The present disclosure relates generally to aircraft target simulation and, in particular, to the real-time, in-flight simulation of a target.

Training exercises are often performed for military aircraft. These training exercises are used to teach pilots how to operate the aircraft. Additionally, the exercises are also used to train the pilots on different strategies and tactics with respect to operating the aircraft. For example, pilots may train in an aircraft to improve skills and reactions to adversarial events. These events may include, for example, without limitation, encountering enemy aircraft, reacting to a presence of surface-to-air missile sites, engaging time sensitive targets, and other suitable events.

A large amount of training may be performed using training devices on the ground. These training devices often take the form of flight simulators. A flight simulator is a system that copies or simulates the experience of flying an aircraft. A flight simulator is meant to make the experience as real as possible. Flight simulators may range from controls and a display in a room to a full-size replica of a cockpit mounted on actuators that are configured to move the cockpit in response to actions taken by a pilot. These types of simulators provide a capability to teach pilots and/or other crew members to operate various aircraft systems and to react to different events.

Additional training is performed through training exercises using live aircraft. These types of training exercises expose pilots to the actual conditions encountered when flying an aircraft. Various conditions cannot be accurately simulated using a flight simulator. For example, the actual movement or forces encountered in flying an aircraft may not be adequately provided through a flight simulator.

With military aircraft, this type of training may involve using multiple live aircraft to perform training on encountering enemy aircraft. Further, various ground platforms also may be used. These ground platforms may include, for example, tanks, surface-to-air missile systems, and other suitable ground units. These types of training exercises provide a pilot with the additional experience needed to operate an aircraft in different conditions.

Live training exercises are difficult and/or expensive to set up and operate. For example, to perform a training exercise in the air, airspace is restricted to other aircraft to avoid unintended incursions into the airspace in which the training occurs. Additionally, fuel, maintenance, and other expenses are required to prepare the aircraft for the exercises, operate the aircraft during the exercises, and perform maintenance after the exercises have concluded.

Further, the amount of airspace may be confining and may restrict the type and amount of movement that aircraft can make during a training exercise. Times and locations where airspace can be restricted may limit the amount of time when training exercises can be performed.

Therefore, it may be desirable to have a system and method that addresses at least some of these issues, and improves upon existing practices.

### BRIEF SUMMARY

Example implementations of the present disclosure are directed to an improved system, method and computer-readable storage medium for real-time, in-flight simulation of a target. In particular, as opposed to using flight simulators or expending live resources for aircraft training exercises, the system enables real-time, in-flight simulation of a target on a display onboard an aircraft. Accordingly, the system may eliminate the cost and difficulty of arranging live aircraft training exercises while providing a more realistic experience than a flight simulation exercise.

A blend of techniques known as live, virtual, constructive (LVC) may be viewed as the future for aviation training. The concept entails linking live aircraft with manned simulators in the "virtual'" world and computer-generated "constructive" forces. Example implementations of the present disclosure may further improve existing LVC aircraft training systems. In accordance with example implementations, target images may be generated and superimposed within a displayable live stream of the environment of an aircraft in flight. The target images may realistically appear within an aircraft display throughout a training mission, and may thereby enhance its overall effectiveness. The present disclosure includes, without limitation, the following example implementations.

In some example implementations, a method is provided for real-time, in-flight simulation of a target on a display onboard an aircraft. The method may comprise generating a live stream of an environment of an aircraft during a flight thereof. The live stream may have associated metadata with structured information indicating a real-time position of the aircraft within the environment. The method may also comprise generating a target image from a source of information from which a plurality of different target images are generable. The method may also comprise generating a synthetic scene of the environment including the target image so generated.

The method may also comprise superimposing the synthetic scene onto the live stream such that the target image is spatially and temporally correlated with the real-time position of the aircraft within the environment. The method may also comprise outputting the live stream with superimposed synthetic scene for presentation on a display of the aircraft during the flight.

In some example implementations of the method of the preceding or any subsequent example implementation, or any combination thereof, the source of information includes at least one of virtual or constructive environment, or an on-ground training system.

In some example implementations of the method of the preceding or any subsequent example implementation, or any combination thereof, the source of information from which the target image is generated defines at least one of a type or geometric features of the target, or a position of the target in the synthetic scene.

In some example implementations of the method of any preceding or any subsequent example implementation, or any combination thereof, generating the synthetic scene of the environment includes rendering the image of the synthetic target registered within the synthetic scene. The image may be a composite image including metadata with structured information indicating a position of the synthetic target within the synthetic scene, and superimposing the synthetic scene onto the live stream may include superimposing the composite image onto the live stream.

In some example implementations of the method of any preceding or any subsequent example implementation, or any combination thereof, the synthetic scene of the environment depicts one or more objects distinct from the synthetic target, and superimposing the synthetic scene onto the live stream includes superimposing the synthetic scene onto the live stream such that the one or more objects are transparent.

In some example implementations of the method of any preceding or any subsequent example implementation, or any combination thereof, the live stream of the environment depicts a terrain, and the method further comprises determining the terrain obstructs at least portion of a view of the target image within the environment and thereby the synthetic scene, and masking the at least portion of the view of the target image from the live stream with the superimposed synthetic scene such that the at least portion of the view of the target image is obstructed by the terrain.

In some example implementations, an apparatus is provided for real-time, in-flight simulation of a target on an aircraft display. The apparatus comprises a processor and a memory storing executable instructions that, in response to execution by the processor, cause the apparatus to implement a number of subsystems, such as a sensor system, target generator, superimposition engine, and occlusion engine configured to at least perform the method of any preceding example implementation, or any combination thereof.

In some example implementations, a computer-readable storage medium is provided for real-time, in-flight simulation of a target. The computer-readable storage medium is non-transitory and has computer-readable program code portions stored therein that, in response to execution by a processor, cause an apparatus to at least perform the method of any preceding example implementation, or any combination thereof.

These and other features, aspects, and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as intended, namely to be combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying drawings which illustrate, by way of example, the principles of some described example implementations.

### BRIEF DESCRIPTION OF THE DRAWING(S)

Having thus described example implementations of the disclosure in general terms, reference will now be made to the accompanying drawings, which are not necessarily drawn to scale, and wherein:
Figure 1 is an illustration of an onboard aircraft target simulation system according to example implementations of the present disclosure;
Figure 2 illustrates an apparatus according to some example implementations; and
Figure 3 is a flow diagram illustrating various operations of a method for real-time, in-flight simulation of a target, in accordance with an example implementation.

### DETAILED DESCRIPTION

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. For example, unless otherwise indicated, reference to something as being a first, second or the like should not be construed to imply a particular order. Also, for example, reference may be made herein to quantitative measures, values, relationships or the like. Unless otherwise stated, any one or more if not all of these may be absolute or approximate to account for acceptable variations that may occur, such as those due to engineering tolerances or the like. Like reference numerals refer to like elements throughout.

Example implementations of the present disclosure are generally directed to aircraft target simulation and, in particular, to real-time, in-flight simulation of a target. Example implementations will be primarily described in conjunction with aerospace applications. It should be understood, however, that example embodiments may be utilized in conjunction with a variety of other applications, both in the aerospace industry and outside of the aerospace industry. In this regard, example embodiments may be utilized on conjunction with complex systems, vehicles or the like, such as in the case of aerospace, automotive, marine and electronics.

Simulation systems may be configured to provide modeling and simulation of human elements operating a target platform including logic, tactics, intelligence, posture (offensive/defensive), and/or chain of command. The modeling and simulation of a physical representation of the target may include parameters such as location in space (e.g., within six (6) degrees of freedom), time, velocity, acceleration, attributes (e.g., lights on/off, flap position, landing gear position, and the like), sensor states (e.g., radio detection and ranging (RADAR) emissions, search modes, tracking, and the like) and counter effect states (e.g., jamming, chaff, flare). The parameters may be referred to as Computer Generated Forces (CGF), Semi-Automated Forces (SAF), or Constructive forces.

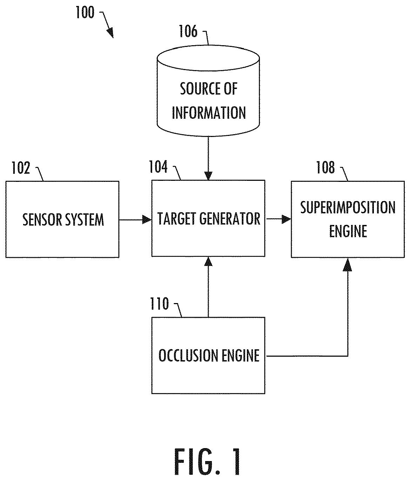

Figure 1 illustrates an onboard aircraft target simulation system **100** according to example implementations of the present disclosure, which may be simply referred to as the "system" herein. The system may be configured to perform a number of different functions or operations, either automatically, under direct operator control, or some combination of thereof. In this regard, the system may be configured to perform one or more of its functions or operations automatically, that is, without being directly controlled by an operator. Additionally or alternatively, the system may be configured to perform one or more of its functions or operations under direct operator control.

The system **100** may be generally configured to provide real-time, in-flight simulation of synthetic targets and thereby improve existing LVC aircraft training systems such as the system described in U.S. Patent App. Pub. No. 2014/0113255 which is incorporated herein by reference. In particular, target images may be generated and superimposed within a displayable live stream of the environment of an aircraft during a flight of the aircraft (i.e., in-flight). As used herein, the term "live stream" may refer to video imagery generated by an aircraft sensor system and presentable on a display of the aircraft for viewing by the aircrew. The live stream may be utilized for target recognition, identification, and/or targeting purposes. The target images may realistically appear within a display of the aircraft (at times more simply referred to as an aircraft display) throughout a training mission, and may thereby enhance its overall effectiveness.

The system **100** may include one or more of each of a number of different subsystems (each an individual system) coupled to one another for performing one or more functions or operations. As shown in Figure 1, for example, the system may include a sensor system **102**, target generator **104**, source of information **106**, superimposition engine **108**, and/or occlusion engine **110** that may be coupled to one another. Although shown as part of the system , one or more of the sensor system, target generator, source of information, superimposition engine and/or occlusion engine may instead be separate from but in communication with the system. It should also be understood that one or more of the subsystems may function or operate as a separate system without regard to others of the subsystems. And further, it should be understood that the system may include one or more additional or alternative subsystems than those shown in Figure 1.

As explained in greater detail below, the sensor system **102** may be generally configured to generate a live stream of an environment of an aircraft during a flight thereof. The live stream may have associated metadata with structured information that indicates a real-time position of the aircraft within the environment. The target generator **104** may be generally configured to generate a target image from the source of information 106 in which the data may include information from which a plurality of different target images are generable. The target generator may also be configured to generate a synthetic scene of the environment including the target image so generated. The superimposition engine 108 may be generally configured to superimpose the synthetic scene onto the live stream such that the image of the target image is spatially and temporally correlated with the real-time position of the aircraft within the environment. The superimposition engine may also be configured to output the live stream with superimposed synthetic scene for presentation on a display of the aircraft during the flight.

According to example implementations of the present disclosure, the system **100** and its subsystems and/or components including the sensor system **102**, target generator **104**, source of information **106**, superimposition engine **108** and/or occlusion engine **110** may be implemented by various means. Means for implementing the systems, subsystems and their respective elements may include hardware, alone or under direction of one or more computer programs from a computer-readable storage medium.

In some examples, one or more apparatuses may be provided that are configured to function as or otherwise implement the systems, subsystems, tools and respective elements shown and described herein. In examples involving more than one apparatus, the respective apparatuses may be connected to or otherwise in communication with one another in a number of different manners, such as directly or indirectly via a wired or wireless network or the like.

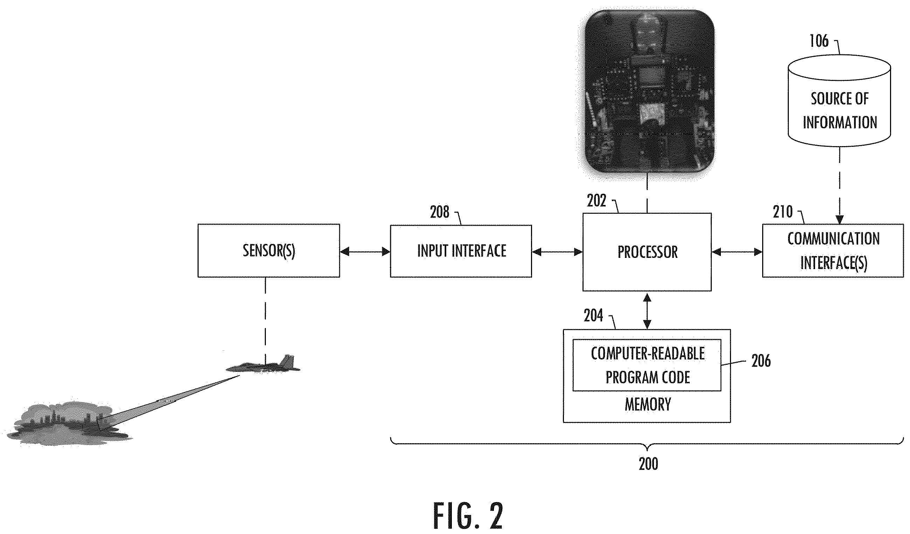

Figure 2 illustrates an apparatus **200** that may be configured to implement the system **100**, and that may be equally configured to individually implement any of its subsystems and/or components, according to some example implementations of the present disclosure. Generally, the apparatus may comprise, include or be embodied in one or more fixed or portable electronic devices.

Examples of suitable electronic devices include an aircraft dashboard, smartphone, tablet computer, laptop computer, desktop computer, workstation computer, server computer or the like. In more particular examples, the electronic device may be embedded in an LVC pod, embedded in or coupled to a control unit or auxiliary processor of an aircraft. Or in some examples, the electronic device may be embodied in a fixed or mobile on-ground mission computing device coupleable (by wired or wirelessly) to the control unit of an aircraft.

The apparatus **200** may include one or more of each of a number of components such as, for example, a processor **202** (e.g., processor unit) connected to a memory **204** (e.g., storage device) having computer-readable program code **206** stored therein. In addition to the memory, the processor may also be connected to one or more interfaces for displaying, transmitting and/or receiving information. The interfaces may include an input interface **208**, communication interface **210** (e.g., communications unit) or the like. Although not separately shown, the processor may include or be connected to an interface to a display of an aircraft.

The input interface **208** and/or communication interface **210** may be configured to receive information such as sensor data from an aircraft or information via the source of information **106**. In some examples, the input interface may be coupled or coupleable to a control unit or sensor(s) of the aircraft, and through which the sensor system **102** of the system **100** implemented by apparatus **200** may be configured to receive information (e.g., sensor data) for generating the live stream of the environment of the aircraft. The apparatus may implement the system further including its other subsystems (e.g., the target generator **104,** source of information **106**, superimposition engine **108** and/or occlusion engine **110**) configured to superimpose a synthetic scene including a target image onto the live stream, as indicated above and described more fully below. The apparatus may then output the live stream with superimposed synthetic scene for presentation on the display of the aircraft during its flight.

Reference is now again made to Figure 1. As indicated above, the sensor system **102** may be configured to generate a live stream of an environment of the aircraft in flight. The sensor system **102** may include at least one of radar system, radar warning receiver, infrared targeting pod, global positioning system unit, and other suitable sensor systems. The live stream may have associated metadata with structured information indicating a real-time position, speed, orientation, or other suitable data of the aircraft within the environment. As described herein, the position of an object such as the aircraft may refer to its coordinate position, angular position (orientation), or combination of its coordinate position and angular position in which an object's position may be defined by the combination of the coordinate position and angular position. As also described herein, real-time should be construed to include not only real-time, but also substantially, approximately or near real-time to account for any time that may be introduced by data processing, transmission or the like. The metadata may also include information regarding weapons on-board the aircraft such as information indicating that a number of weapons have been fired on aircraft.

In some example implementations, the aircraft may provide its real-time position in the form of metadata. For example, the metadata may be generated by a global positioning system (GPS) or similar positional sensor mounted onto a platform of the aircraft. In another example, the metadata may be generated by an alternative data and/or sensing systems, or generated based at least in part on an estimated location of the aircraft indicated by manually entered user input. The metadata may be utilized to determine where the aircraft may be positioned within a synthetic environment. The metadata may also include other flight parameters and/or data including an aircraft time, velocity, acceleration data, and sensor data such as field of view, pointing angles, slew rates, and the like.

The target generator **104** may be configured to generate a target image from the source of information **106** of information from which a plurality of different target images are generable. The target generator may be or include a system configured to provide for representation of CGFs for human observation. In some examples, the target generator may be or include a system for rendering three-dimensional (3D) images in at least one of a visual, infrared, or electromagnetic spectrum. The target image may include a 3D representation of the target for visual sensors (e.g., human eyes, infrared sensor, Synthetic Aperture RADAR, and the like). The target image may also be or include an electronic signature displayable to a human (e.g., blips within a RADAR display).

In some examples, the source of information **106** may be or include a virtual or constructive environment having virtual or constructive data therein. In these examples implementations, the target generator may be or include a CGF. In some examples, the source of information may include a library of targets or simulated objects that may be utilized to obtain characteristics for generating the target image. Examples of suitable characteristics of a target may include its type or geometric features, or position (coordinate and/or angular position). In some example implementations, the targets may be based at least in part on a scenario associated with a training mission of the aircraft.

In some examples, the virtual data may be or include any data generated through the use of number of training devices. In these examples, the training devices may be any device that may be operated by a human operator. Further in these examples, the training devices may include a number of flight simulators. In this example, the flight simulators may be used to generate number of simulation objects. In some examples, the constructive data may be or include data generated by a software program to simulate an object.

In other examples, the source of information **106** may include an on-ground training system through which parameters of a training scenario may be specified. For example, a training mission may be defined to have a number of different scenarios for a training session. These scenarios may include, for example, without limitation, an air-to-air engagement scenario, an air-to-ground strike scenario, a joint-operation scenario including other aircraft, and other suitable scenarios. With one or more of the different illustrative implementations, multiple scenarios may be performed in a training session that may require more time, airspace, and equipment availability than possible to perform in a single training session or flight. In some examples, the definition of a training area, the aircraft armament, sensor parameters, behavior, routes, and other information may be set. Various parameters and equipment to be used in each scenario in the mission may also be defined in which both live objects, as well as simulation objects may be identified for use in a scenario and thereby for use in generating the target image.

As previously indicated, information provided via the source of information **106** may be received through an input interface (e.g., input interface **208**) and/or communication interface (e.g., communication interface **210**). However, it should be noted that at least a portion of the information may be locally stored and/or locally accessible from onboard the aircraft (e.g., in an onboard portion of the training system), as opposed to being exclusively transmitted through the input or communication interfaces.

The target generator **104** may also be configured to generate a synthetic scene of the environment (e.g., 3D synthetic scene of the environment) including the target image so generated. As indicated above, in some examples, the source of information from which the target image is generated may define at least one of a type or geometric features of the target, or a position (coordinate and/or angular position) of the target in the synthetic scene.

In some example implementations, the target generator **104** may be configured to render the image of the synthetic target registered within the synthetic scene. In these example implementations, characteristics of the target, such as its geometric features and/or position, may be the basis for a 3D rendering of the target image. The image of the synthetic target registered within the synthetic scene may be a composite image including the metadata with structured information indicating at least the position of the synthetic target within the synthetic scene.

The superimposition engine **108** may be configured to superimpose the synthetic scene onto the live stream such that the target image is spatially and temporally correlated with the real-time position of the aircraft within the environment. As such, characteristics of the target may be correlated (e.g., proper position) to the real-time live stream from a perspective view of the aircraft. In some examples, the synthetic scene of the environment may depict one or more objects distinct from the synthetic target. In these examples, the superimposition engine may be configured to superimpose the synthetic scene onto the live stream such that the one or more objects are transparent.

In some example implementations, in which the target generator **104** renders a composite image of the synthetic target registered within the synthetic scene, the superimposition engine **108** may be configured to superimpose the synthetic scene onto the live stream by superimposing the composite image onto the live stream. The superimposition engine may also be configured to output the live stream with superimposed synthetic scene for presentation on a display of the aircraft. The display of the aircraft may be or include a display within one or more of the visual, infrared, and/or electromagnetic (RADAR) spectrums.

In some example implementations, the live stream of the environment may depict a terrain. In these implementations, the occlusion engine **110** may be configured to determine the terrain obstructs at least portion of a view of the target image within the environment and thereby the synthetic scene. The occlusion engine may further mask the at least portion of the view of the target image from the live stream with the superimposed synthetic scene such that the at least portion of the view of the target image is obstructed by the terrain.

In some example, the occlusion engine **110** may include a reference database comprising information about the terrain of the environment for masking at least a portion of the terrain. The reference database may be or include a 3D database of the environment including satellite imagery, an elevation map, and/or other known 3D feature data or 3D content that provide a virtual representation of the real world that is being imaged. In some example implementations, the reference database may be built from the satellite imagery, an elevation map, or any known 3D feature data. In other example implementations, the reference database may be built from alternative imaging sources include computer-aided design (CAD) drawings, rasterized road networks, urban feature(s) data, and the like.

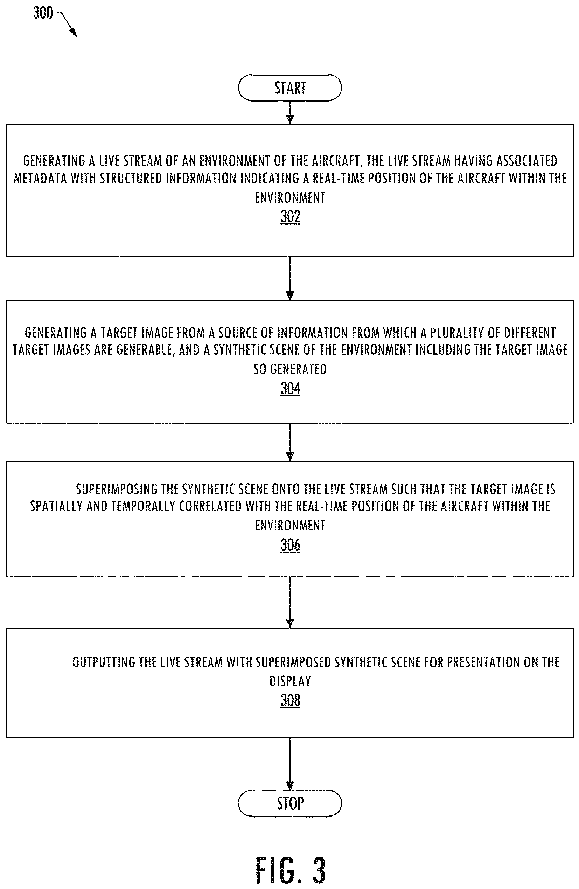

Figure 3 illustrates a flowchart including various operations of a method **300** for real-time, in-flight simulation of a target, in accordance with an example implementation of the present disclosure. As shown at block **302**, the method may include generating a live stream of an environment of an aircraft during a flight thereof. The live stream may have associated metadata with structured information indicating a real-time position of the aircraft within the environment. The method may also include generating a target image from a source of information from which a plurality of different target images are generable, and generating a synthetic scene of the environment including the target image so generated, as shown at block **304**. The method may also include superimposing the synthetic scene onto the live stream such that the target image is spatially and temporally correlated with the real-time position of the aircraft within the environment, as shown at block **306**. The method may also include outputting the live stream with superimposed synthetic scene for presentation on a display of the aircraft during the flight, as shown at block **308**.

Reference is now again made to Figure 2, which illustrates various components of an apparatus **200** including a processor **202**, a memory **204** having computer-readable program code **206** stored therein, an input interface **208**, and/or communication interface **210**. The processor **202** is generally any piece of computer hardware that is capable of processing information such as, for example, data, computer programs and/or other suitable electronic information. The processor is composed of a collection of electronic circuits some of which may be packaged as an integrated circuit or multiple interconnected integrated circuits (an integrated circuit at times more commonly referred to as a "chip"). The processor may be configured to execute computer programs, which may be stored onboard the processor or otherwise stored in the memory **204** (of the same or another apparatus).

The processor **202** may be a number of processors, a multi-processor core or some other type of processor, depending on the particular implementation. Further, the processor may be implemented using a number of heterogeneous processor systems in which a main processor is present with one or more secondary processors on a single chip. As another illustrative example, the processor may be a symmetric multi-processor system containing multiple processors of the same type. In yet another example, the processor may be embodied as or otherwise include one or more application-specific integrated circuits (ASICs), field-programmable gate arrays (FPGAs) or the like. Thus, although the processor may be capable of executing a computer program to perform one or more functions, the processor of various examples may be capable of performing one or more functions without the aid of a computer program.

The memory **204** is generally any piece of computer hardware that is capable of storing information such as, for example, data, computer programs (e.g., computer-readable program code **206**) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

The input interface **208** may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

The communication interface **210** may be coupled to the processor **202** and configured to transmit and/or receive information, such as to and/or from other apparatus(es), network(s) or the like. The communication interface may be configured to transmit and/or receive information by physical (wired) and/or wireless communications links. Examples of suitable communication interfaces include a network interface controller (NIC), wireless NIC (WNIC) or the like.

As indicated above, the processor **202** may include or be connected to an interface to a display of an aircraft. Additionally or alternatively, in some example implementations, the apparatus may itself include a display coupled to the processor and configured to present or otherwise display information to a user, such as in a manner the same as or similar to that of the aircraft display. Examples of suitable displays include a liquid crystal display (LCD), light-emitting diode display (LED), plasma display panel (PDP) or the like.

As also indicated above, program code instructions may be stored in memory, and executed by a processor, to implement functions of the systems, subsystems and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processor or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processor or other programmable apparatus to configure the computer, processor or other programmable apparatus to execute operations to be performed on or by the computer, processor or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor or other programmable apparatus provide operations for implementing functions described herein.

Execution of instructions by a processor, or storage of instructions in a computer-readable storage medium, supports combinations of operations for performing the specified functions. In this manner, an apparatus **200** may include a processor **202** and a computer-readable storage medium or memory **204** coupled to the processor, where the processor is configured to execute computer-readable program code **206** stored in the memory. It will also be understood that one or more functions, and combinations of functions, may be implemented by special purpose hardware-based computer systems and/or processors which perform the specified functions, or combinations of special purpose hardware and program code instructions.

Many modifications and other implementations of the disclosure set forth herein will come to mind to one skilled in the art to which the disclosure pertains having the benefit of the teachings presented in the foregoing description and the associated drawings. Therefore, it is to be understood that the disclosure is not to be limited to the specific implementations disclosed and that modifications and other implementations are intended to be included within the scope of the appended claims. Moreover, although the foregoing description and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Further, the disclosure comprises embodiments according to the following clauses:
(1) An apparatus for real-time, in-flight simulation of a target, the apparatus comprising a processor and a memory storing executable instructions that, in response to execution by the processor, cause the apparatus to implement at least:
   a sensor system configured to generate a live stream of an environment of an aircraft during a flight thereof, the live stream having associated metadata with structured information indicating a real-time position of the aircraft within the environment;
   a target generator configured to generate a target image from a source of information from which a plurality of different target images are generable, the target generator being configured to generate a synthetic scene of the environment including the target image so generated; and
   a superimposition engine configured to superimpose the synthetic scene onto the live stream such that the target image is spatially and temporally correlated with the real-time position of the aircraft within the environment, the superimposition engine being configured to output the live stream with superimposed synthetic scene for presentation on a display of the aircraft during the flight.
(2) The apparatus of clause 1, wherein the source of information includes at least one of a virtual or constructive environment, or an on-ground training system.
(3) The apparatus of any preceding clause, in particular clause 1, wherein the source of information from which the target image is generated defines at least one of a type or geometric features of the target, or a position of the target in the synthetic scene.
(4) The apparatus of any preceding clause, in particular clause 1, wherein the target generator being configured to generate the synthetic scene of the environment includes being configured to render the image of the synthetic target registered within the synthetic scene, the image being a composite image including metadata with structured information indicating a position of the synthetic target within the synthetic scene, and
   wherein the superimposition engine being configured to superimpose the synthetic scene onto the live stream includes being configured to superimpose the composite image onto the live stream.
(5) The apparatus of any preceding clause, in particular clause 1, wherein the synthetic scene of the environment depicts one or more objects distinct from the synthetic target, and the superimposition engine being configured to superimpose the synthetic scene onto the live stream includes being configured to superimpose the synthetic scene onto the live stream such that the one or more objects are transparent.
(6) The apparatus of any preceding clause, in particular clause 1, wherein the live stream of the environment depicts a terrain, and the memory stores further executable instructions that, in response to execution by the processor, cause the apparatus to further implement at least:
   an occlusion engine configured to determine the terrain obstructs at least portion of a view of the target image within the environment and thereby the synthetic scene, and mask the at least portion of the view of the target image from the live stream with superimposed synthetic scene such that the at least portion of the view of the target image is obstructed by the terrain.
(7) A method for real-time, in-flight simulation of a target, the method comprising:
   generating a live stream of an environment of an aircraft during a flight thereof, the live stream having associated metadata with structured information indicating a real-time position of the aircraft within the environment;
   generating a target image from a source of information from which a plurality of different target images are generable;
   generating a synthetic scene of the environment including the target image so generated;
   superimposing the synthetic scene onto the live stream such that the target image is spatially and temporally correlated with the real-time position of the aircraft within the environment; and
   outputting the live stream with superimposed synthetic scene for presentation on a display of the aircraft during the flight.
(8) The method of clause 7, wherein the source of information includes at least one of a virtual or constructive environment, or an on-ground training system.
(9) The method of any preceding clause, in particular clause 7, wherein the source of information from which the target image is generated defines at least one of a type or geometric features of the target, or a position of the target in the synthetic scene.
(10) The method of any preceding clause, in particular clause 7, wherein generating the synthetic scene of the environment includes rendering the image of the synthetic target registered within the synthetic scene, the image being a composite image including metadata with structured information indicating a position of the synthetic target within the synthetic scene, and
   wherein superimposing the synthetic scene onto the live stream includes superimposing the composite image onto the live stream.
(11) The method of any preceding clause, in particular clause 7, wherein the synthetic scene of the environment depicts one or more objects distinct from the synthetic target, and superimposing the synthetic scene onto the live stream includes superimposing the synthetic scene onto the live stream such that the one or more objects are transparent.
(12) The method of any preceding clause, in particular clause 7, wherein the live stream of the environment depicts a terrain, and the method further comprises:
   determining the terrain obstructs at least portion of a view of the target image within the environment and thereby the synthetic scene, and mask the at least portion of the view of the target image from the live stream with superimposed synthetic scene such that the at least portion of the view of the target image is obstructed by the terrain.
(13) A computer-readable storage medium for real-time, in-flight simulation of a target, the computer-readable medium having computer-readable program code stored therein that, in response to execution by a processor, cause an apparatus to at least:
   generate a live stream of an environment of an aircraft during a flight thereof, the live stream having associated metadata with structured information indicating a real-time position of the aircraft within the environment;
   generate a target image from a source of information from which a plurality of different target images are generable;
   generate a synthetic scene of the environment including the target image so generated;
   superimpose the synthetic scene onto the live stream such that the target image is spatially and temporally correlated with the real-time position of the aircraft within the environment; and
   output the live stream with superimposed synthetic scene for presentation on a display of the aircraft during the flight.
(14) The computer-readable storage medium of clause 13, wherein the source of information includes at least one of a virtual or constructive environment, or an on-ground training system.
(15) The computer-readable storage medium of any preceding clause, in particular clause 13, wherein the source of information from which the target image is generated defines at least one of a type or geometric features of the target, or a position of the target in the synthetic scene.
(16) The computer-readable storage medium of any preceding clause, in particular clause 13, wherein the apparatus being caused to generate the synthetic scene of the environment includes being caused to render the image of the synthetic target registered within the synthetic scene, the image being a composite image including metadata with structured information indicating a position of the synthetic target within the synthetic scene, and
   wherein the apparatus being caused to superimpose the synthetic scene onto the live stream includes being caused to superimpose the composite image onto the live stream.
(17) The computer-readable storage medium of any preceding clause, in particular clause 13, wherein the synthetic scene of the environment depicts one or more objects distinct from the synthetic target, and the apparatus being caused to superimpose the synthetic scene onto the live stream includes being caused to superimpose the synthetic scene onto the live stream such that the one or more objects are transparent.
(18) The computer-readable storage medium of any preceding clause, in particular clause 13, wherein the live stream of the environment depicts a terrain, and the computer-readable storage medium has further computer-readable program code portions stored therein that in response to execution by the processor, cause the apparatus to at least:
   determine the terrain obstructs at least portion of a view of the target image within the environment and thereby the synthetic scene, and mask the at least portion of the view of the target image from the live stream with the superimposed synthetic scene such that the at least portion of the view of the target image is obstructed by the terrain.

## Claims

1. An apparatus for real-time, in-flight simulation of a target, the apparatus comprising a processor and a memory storing executable instructions that, in response to execution by the processor, cause the apparatus to implement at least:
a sensor system configured to generate a live stream of an environment of an aircraft during a flight thereof, the live stream having associated metadata with structured information indicating a real-time position of the aircraft within the environment;
a target generator configured to generate a target image from a source of information from which a plurality of different target images are generable, the target generator being configured to generate a synthetic scene of the environment including the target image so generated; and
a superimposition engine configured to superimpose the synthetic scene onto the live stream such that the target image is spatially and temporally correlated with the real-time position of the aircraft within the environment, the superimposition engine being configured to output the live stream with superimposed synthetic scene for presentation on a display of the aircraft during the flight.

2. The apparatus of claim 1, wherein the source of information includes at least one of a virtual or constructive environment, or an on-ground training system.

3. The apparatus of any of claims 1 or 2, wherein the source of information from which the target image is generated defines at least one of a type or geometric features of the target, or a position of the target in the synthetic scene.

4. The apparatus of any of claims 1-3, wherein the target generator being configured to generate the synthetic scene of the environment includes being configured to render the image of the synthetic target registered within the synthetic scene, the image being a composite image including metadata with structured information indicating a position of the synthetic target within the synthetic scene, and
wherein the superimposition engine being configured to superimpose the synthetic scene onto the live stream includes being configured to superimpose the composite image onto the live stream.

5. The apparatus of any of claims 1-4, wherein the synthetic scene of the environment depicts one or more objects distinct from the synthetic target, and the superimposition engine being configured to superimpose the synthetic scene onto the live stream includes being configured to superimpose the synthetic scene onto the live stream such that the one or more objects are transparent.

6. The apparatus of any of claims 1-5, wherein the live stream of the environment depicts a terrain, and the memory stores further executable instructions that, in response to execution by the processor, cause the apparatus to further implement at least:
an occlusion engine configured to determine the terrain obstructs at least portion of a view of the target image within the environment and thereby the synthetic scene, and mask the at least portion of the view of the target image from the live stream with superimposed synthetic scene such that the at least portion of the view of the target image is obstructed by the terrain.

7. A method for real-time, in-flight simulation of a target, the method comprising:
generating a live stream of an environment of an aircraft during a flight thereof, the live stream having associated metadata with structured information indicating a real-time position of the aircraft within the environment;
generating a target image from a source of information from which a plurality of different target images are generable;
generating a synthetic scene of the environment including the target image so generated;
superimposing the synthetic scene onto the live stream such that the target image is spatially and temporally correlated with the real-time position of the aircraft within the environment; and
outputting the live stream with superimposed synthetic scene for presentation on a display of the aircraft during the flight.

8. The method of claim 7, wherein the source of information includes at least one of a virtual or constructive environment, or an on-ground training system.

9. The method of any of claims 7 or 8, wherein the source of information from which the target image is generated defines at least one of a type or geometric features of the target, or a position of the target in the synthetic scene.

10. The method of any of claims 7-9, wherein generating the synthetic scene of the environment includes rendering the image of the synthetic target registered within the synthetic scene, the image being a composite image including metadata with structured information indicating a position of the synthetic target within the synthetic scene, and
wherein superimposing the synthetic scene onto the live stream includes superimposing the composite image onto the live stream.

11. The method of any of claims 7-10, wherein the synthetic scene of the environment depicts one or more objects distinct from the synthetic target, and superimposing the synthetic scene onto the live stream includes superimposing the synthetic scene onto the live stream such that the one or more objects are transparent.

12. The method of any of claims 7-11, wherein the live stream of the environment depicts a terrain, and the method further comprises:
determining the terrain obstructs at least portion of a view of the target image within the environment and thereby the synthetic scene, and mask the at least portion of the view of the target image from the live stream with superimposed synthetic scene such that the at least portion of the view of the target image is obstructed by the terrain.

13. A computer-readable storage medium for real-time, in-flight simulation of a target, the computer-readable medium having computer-readable program code stored therein that, in response to execution by a processor, cause an apparatus to perform the method of any of claims 7-12.
